# FASCICULE DE BREVET EUROPEEN

(11) **EP 0 952 898 B1**
(45) Date de publication et mention de la délivrance du brevet: **05.06.2002**
(21) Numéro de dépôt: 98954518.1
(22) Date de dépôt: 05.11.1998
(51) Int. Cl.: B23D 21/00, B26D 7/10

(54) **DISPOSITIF POUR EFFECTUER, DANS UN TUBE, UNE DECOUPE DANS UN PLAN**
ROHRSCHNEIDVORRICHTUNG
DEVICE FOR PRODUCING, IN A TUBE, A CUT IN A CUTTING PLANE

(30) Priorité: 20.11.1997 FR 9714552
(43) Date de publication de la demande: 03.11.1999
(73) Titulaire: Société de Conceptions et Réalisations d'Automatisme de Production - SOCRATECH, 91790 Boissy-sous-Saint-Yon (FR)
(72) Inventeur: HUMBERT, Robert, F-91290 La Norville (FR)
(74) Mandataire: Flavenot, Bernard
(86) Numéro de dépôt international: FR9802362
(87) Numéro de publication internationale: WO9926750

(56) Documents cités:
- AU-A- 4 704 672

## Description

La présente invention concerne les dispositifs permettant d'effectuer une découpe selon un plan de coupe dans un tube ayant une paroi d'une épaisseur relativement faible, qui trouvent une application particulièrement avantageuse dans la réalisation de tronçons de tubes.

Dans de nombreux domaines techniques, il est nécessaire de réaliser des conduits de forme très variable, par exemple pour véhiculer un fluide. Pour obtenir de tels conduits, on les réalise en série dans des tubes de très grande longueur que l'on découpe ensuite en tronçons. De tels tronçons sont par exemple utilisés dans le domaine automobile pour véhiculer les fluides de lubrification des moteurs.

Actuellement, pour réaliser ces tronçons de tubes, on découpe les tubes au moyen de lames abrasives ou de scies à dents animées en rotation et en translation. On obtient ainsi des tronçons de tubes de forme et dimension voulues mais cette technique présente des inconvénients.

En effet, on conçoit aisément que, par exemple pour l'application dans le domaine automobile mentionné ci-avant, il est généralement nécessaire de découper un grand nombre de tronçons de tubes et que, dans la pratique, il est impossible de tous les vérifier quant à la qualité de leur découpe et de tous les nettoyer impeccablement en éliminant toutes les barbes et tous les copeaux produits lors de la découpe qui peuvent se trouver sur les bords des tronçons ou à l'intérieur.

On constate en fait que, malgré tout le soin apporté à leur vérification et à leur nettoyage, les bords de certains tronçons ne sont pas toujours très nets et, surtout, il reste des copeaux à l'intérieur des tronçons.

Or, ces copeaux peuvent ultérieurement se détacher de la paroi intérieure du tronçon de tube et être entraînés par le fluide pour, par exemple dans le cas de l'application mentionnée ci-avant, se déposer éventuellement sur les éléments vitaux des moteurs et contribuer à leur détérioration.

Aussi la présente invention a-t-elle pour but de réaliser un dispositif permettant d'effectuer, dans un tube ayant une paroi d'une épaisseur relativement faible, une découpe dans un plan de coupe, qui évite la production de barbes et de copeaux.

Plus précisément, la présente invention a pour objet un dispositif permettant d'effectuer, dans un tube ayant une paroi d'une épaisseur relativement faible, une découpe suivant un plan de coupe, comportant au moins:
une lame de coupe comportant un fil de coupe circulaire,
des moyens pour animer la lame de coupe d'un mouvement de rotation autour d'un axe de rotation perpendiculaire au plan de coupe,
des moyens commandables pour déplacer la lame de coupe dans un mouvement de translation de façon que le fil de coupe se déplace dans le plan de coupe, et
des moyens de commande,
caractérisé en ce que
lesdits moyens de commande sont programmables pour délivrer à leur sortie des signaux de commande appliqués à l'entrée des moyens commandables de déplacement en translation de la lame de coupe, de façon que:
dans une première étape, le fil de coupe soit amené au contact d'un point de la paroi du tube situé dans le plan de coupe, que
dans une deuxième étape suivant la première, le fil de coupe soit appliqué contre la paroi du tube au niveau dudit point avec une force de pression donnée et pendant un temps déterminé, pendant que la lame de coupe est animée de son mouvement de rotation, pour effectuer par friction au moins un ramollissement de la partie de matière entourant le point, et que
dans une troisième étape suivant la deuxième, la lame de coupe subisse une translation brutale tout en étant maintenue en rotation, de façon que le fil de coupe décrive tout le plan de coupe.

D'autres caractéristiques et avantages de la présente invention apparaîtront au cours de la description suivante donnée en regard des dessins annexés à titre illustratif, mais nullement limitatif, dans lesquels:
La figure 1 représente, dans une vue de côté, un mode de réalisation d'un dispositif pour effectuer, dans un tube ayant une paroi d'une épaisseur relativement faible, une découpe dans un plan de coupe,
La figure 2 représente une coupe schématique d'une partie du dispositif selon le mode de réalisation illustré sur la figure 1, et
La figure 3 représente, sous forme schématique, une vue partielle d'un autre mode de réalisation du dispositif selon l'invention.

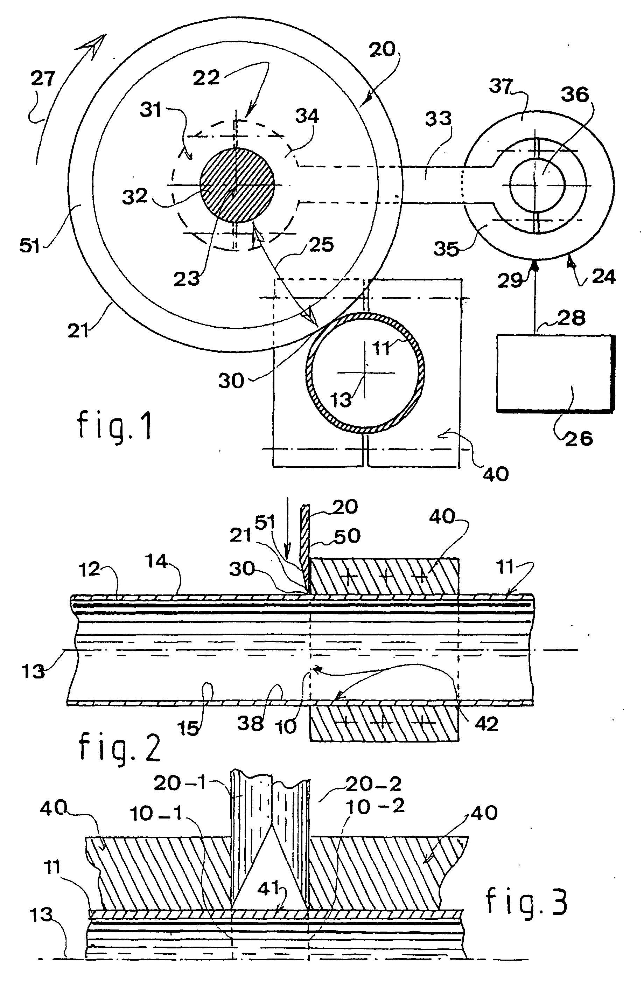

Les figures 1 à 3 représentent deux modes de réalisation du dispositif selon l'invention. Cependant, les mêmes références y désignent les mêmes éléments quelle que soit la figure sur laquelle elles apparaissent et quel que soit le mode de représentation de ces éléments.

La présente invention concerne un dispositif permettant d'effectuer, dans un tube 11 ayant une paroi 12 d'une épaisseur relativement faible, une découpe suivant un plan de coupe 10.

Par référence plus particulièrement aux figures 1 et 2, le dispositif comporte au moins une lame de coupe 20 par exemple lisse ou "de forme" comportant un fil de coupe circulaire 21 qui est extérieur dans le mode de réalisation illustré, des moyens 22 pour animer la lame de coupe d'un mouvement de rotation 27 autour d'un axe de rotation 23 perpendiculaire au plan de coupe 10, et des moyens commandables 24 pour déplacer la lame de coupe dans un mouvement de translation 25 de façon que le fil de coupe 21 se déplace dans le plan de coupe.

Dans un mode de réalisation possible, les moyens 22 pour animer la lame de coupe d'un mouvement de rotation autour de l'axe de rotation sont constitués, par exemple, par un moteur 31 dont l'arbre de sortie 32 est couplé à la lame de coupe. Ce moteur est avantageusement un moteur dont la vitesse de rotation peut être adaptée et commandée pour prendre toutes les valeurs comprises entre deux vitesses de rotation déterminées.

Quant aux moyens commandables 24 pour déplacer la lame de coupe dans un mouvement de translation 25 ou analogue de façon que le fil de coupe 21 se déplace dans le plan de coupe 10, ils peuvent prendre différentes formes.

La figure 1 en représente une possible, dans laquelle les moyens commandables 24 comportent un bras 33 dont une extrémité 34 est solidaire, de façon directe ou indirecte, du stator du moteur 31 défini ci-avant, et dont l'autre extrémité 35 est liée à l'arbre de sortie 36 d'un second moteur 37 qui est lié au référentiel sur lequel est considéré fixe le tube 11. Dans ce cas, la translation (illustrée par les flèches 25) de la lame de coupe est définie sur un cercle centré sur l'axe de rotation du second moteur 37. Il est de plus précisé que, de façon avantageuse, le diamètre de la lame de coupe 20 est choisi beaucoup plus grand que celui du tube 11, pour obtenir une découpe totale du tube par un seul passage en translation de la lame.

En outre, le second moteur 37 est choisi d'un type qui permet de commander sa vitesse et son sens de rotation.

Le dispositif comporte en outre des moyens de commande 26 des moyens commandables 24 pour déplacer la lame de coupe dans son mouvement de translation.

Ces moyens de commande 26 sont programmables pour délivrer à leur sortie 28 des signaux de commande appliqués à l'entrée 29 du second moteur 37, de façon que, dans une première étape, le fil de coupe 21 soit amené au contact d'un point 30 de la paroi 12 situé dans le plan de coupe 10 puis, dans une deuxième étape suivant la première, que le fil de coupe 21 soit appliqué contre la paroi du tube au niveau du point 30 avec une force de pression donnée et pendant un temps déterminé, pendant que la lame de coupe 20 est animée de son mouvement de rotation, pour effectuer par friction du fil de coupe sur la surface extérieure 14 du tube 11 au point 30, un ramollissement de la partie de matière entourant ce point, et que, dans une troisième étape suivant la deuxième, la lame de coupe subisse une translation brutale 25 tout en étant maintenue en rotation, de façon que le fil de coupe 21 décrive tout le plan de coupe 10.

Quand le tube est totalement découpé, la lame 20 est ramenée à sa position origine pour que les première, deuxième et troisième étapes décrites ci-dessus puissent être à nouveau effectuées pour la réalisation d'une autre découpe.

De façon très préférentielle, pour éviter que le bord de la découpe du tronçon à obtenir ne se déforme, le dispositif comporte en outre des moyens 40 pour maintenir au moins une portion 42 de la paroi 12 du tube 11, bordant un côté du plan de coupe 10. Ces moyens 40 sont par exemple constitués par des buses, des colliers ou analogues entourant le tube 11 du côté, par rapport au plan de coupe, qui doit constituer le tronçon à obtenir, en l'enserrant fermement.

Les lames de coupe utilisées ont la forme générale d'un tronc de cône comportant une grande base 50 et une surface latérale conique de révolution 51. La grande base 50 est perpendiculaire à l'axe de rotation 23 de la lame et la surface latérale conique de révolution 51 est centrée sur cet axe de rotation 23, de même que le fil de coupe 21 constitué par le bord de la grande base 50.

Pour l'opération de découpe, la lame 20 sera avantageusement positionnée de façon que la grande base 50 soit en regard et au plus près des moyens de maintien 40 du tube.

Ces lames sont réalisées dans un métal dur, par exemple de l'acier au carbone ou analogue.

Le dispositif décrit ci-dessus permet d'effectuer, dans un tube 11 ayant une paroi 12 d'une épaisseur relativement faible, une découpe dans un plan de coupe 10 qui peut avoir différentes orientations par rapport à l'axe 13 du tube.

Le dispositif permet d'obtenir, lors de la deuxième étape définie ci-avant, un échauffement de la partie de matière entourant le point 30 avantageusement de la surface extérieure 14 de la paroi du tube et situé dans le plan de coupe 10 pour obtenir au moins un ramollissement de la matière entourant ce point 30 jusqu'à un état que les techniciens dénomment "point rouge". Ce ramollissement pourra même, dans certains cas, aller jusqu'à la fusion.

L'échauffement de la matière entourant ce point 30 est déterminé, par exemple expérimentalement pour chaque type de tube à couper, en fonction de la nature du matériau, de l'épaisseur de la paroi, du diamètre du tube, etc, pour que la quantité de matière au moins ramollie entourant le point 30 soit la plus faible possible mais que le ramollissement atteigne néanmoins la surface intérieure 15 du tube.

Lors de la troisième étape définie ci-dessus, après que le ramollissement de la partie de matière entourant le point 30 ait été obtenu comme défini ci-dessus, le dispositif permet d'effectuer un cisaillement du tube dans le plan de coupe à partir du point 30.

Le cisaillement est une coupe qui est obtenue avec un outil, par exemple un couteau, un ou des ciseaux à lame qui peut être lisse ou "de forme", c'est-à-dire présentant un fil de coupe bordé par des ondulations ou alvéoles. Cette technique permet de fendre la matière et d'écarter les deux bords, par opposition à la technique du limage, sciage ou analogue à l'aide d'une lame abrasive ou analogue qui enlève de la matière et produit des barbes, copeaux ou analogues.

Le cisaillement est obtenu en translatant brutalement la lame de coupe 20 de façon que le fil de coupe 21 reste contenu dans le plan de coupe 10, tout en maintenant la rotation de la lame autour de son axe de rotation, l'axe de rotation restant perpendiculaire au plan de coupe.

Avec le dispositif décrit ci-dessus, on obtient une coupe franche sans bavures, ou en quantité négligeable, et surtout sans la production d'aucun copeau de matière. La qualité de la découpe ainsi obtenue est telle qu'elle ne nécessite plus les opérations de vérification et de nettoyage des tronçons qui étaient nécessaires après la mise en oeuvre des techniques de l'art antérieur rappelées au préambule de la présente description.

Il est précisé que, lors de la découpe du tube 11 à l'aide du dispositif selon le mode de réalisation illustré sur les figures 1 et 2, le bord de la partie 38 du tube qui n'est pas maintenue à l'aide des moyens 40 risque d'être sensiblement déformé et aplati, ce qui rend dans ce cas le reste du tube inutilisable. Pour obtenir un bord franc, et donc un reste de tube utilisable, il faut éliminer le bord déformé en effectuant une autre découpe en maintenant alors la partie 38 du tube.

La figure 3 illustre schématiquement un mode de réalisation d'un dispositif selon l'invention pour réaliser, dans un même tube 11, deux découpes simultanées permettant de réduire au maximum les déchets de découpe.

Dans ce mode de réalisation, le dispositif comporte deux lames de coupe 20-1, 20-2 en forme de tronc de cône comportant chacune une grande base et une surface latérale conique de révolution. Les deux lames sont montées en rotation sur un même arbre de rotation de façon que les deux grandes bases soient parallèles et les surfaces latérales coniques en opposition, comme illustré sur la figure 3.

Le fonctionnement du dispositif selon cette figure 3, dans toutes ses étapes, est identique à celui décrit ci-avant en regard des figures 1 et 2 et ne sera donc pas décrit à nouveau. L'avantage présenté par le mode de réalisation selon la figure 3 consiste dans le fait que chaque opération de découpe du tube permet d'obtenir deux bords nets et non déformés, respectivement de deux tronçons consécutifs et respectivement dans deux plans de coupe 10-1 et 10-2. Les deux autres bords, ceux qui risquent d'être déformés, sont situés sur la partie de tube 41 comprise entre les deux plans de coupe 10-1 et 10-2 qui constitue un déchet de découpe et qui est éliminée en tant que tel.

## Revendications

1. Dispositif permettant d'effectuer, dans un tube (11) ayant une paroi (12) d'une épaisseur relativement faible, une découpe suivant un plan de coupe (10), comportant au moins:
une lame de coupe (20) comportant un fil de coupe circulaire (21),
des moyens (22) pour animer la lame de coupe d'un mouvement de rotation autour d'un axe de rotation (23) perpendiculaire au plan de coupe,
des moyens commandables (24) pour déplacer la lame de coupe dans un mouvement de translation (25) de façon que le fil de coupe (21) se déplace dans le plan de coupe (10), et
des moyens de commande,
**caractérisé en ce que**
lesdits moyens de commande (26) sont programmables pour délivrer à leur sortie (28) des signaux de commande appliqués à l'entrée (29) des moyens commandables (24) de déplacement en translation de la lame de coupe, de façon que:
dans une première étape, le fil de coupe (21) soit amené au contact d'un point (30) de la paroi (12) situé dans le plan de coupe (10), que
dans une deuxième étape suivant la première, le fil de coupe (21) soit appliqué contre la paroi du tube au niveau du point (30) avec une force de pression donnée et pendant un temps déterminé, pendant que la lame de coupe (20) est animée de son mouvement de rotation, pour effectuer par friction au moins un ramollissement de la partie de matière entourant le point (30), et que
dans une troisième étape suivant la deuxième, la lame de coupe subisse une translation brutale (25) tout en étant maintenue en rotation, de façon que le fil de coupe (21) décrive tout le plan de coupe (10).

2. Dispositif selon la revendication 1, **caractérisé par le fait qu'**il comporte en outre des moyens (40) pour maintenir au moins une portion (42) de la paroi (12) du tube (11), bordant un côté du plan de coupe (10).

3. Dispositif selon l'une des revendications 1 et 2, **caractérisé par le fait que** la lame de coupe (20) adopte la forme d'un tronc de cône comportant une grande base (50) et une surface latérale conique de révolution (51), le fil de coupe circulaire (21) étant constitué par le bord de la grande base (50), ladite grande base étant perpendiculaire à l'axe de rotation (23) de la lame de coupe et la surface latérale conique de révolution (51) étant centrée sur ledit axe de rotation.

4. Dispositif selon la revendication 3 pour effectuer, dans un même tube (11), deux découpes simultanées respectivement dans deux plans de coupe parallèles (10-1, 10-2), **caractérisé par le fait qu'**il comporte deux lames de découpe (20-1; 20-2) en forme de tronc de cône comportant chacune une grande base et une surface latérale conique de révolution, les deux dites lames étant montées en rotation sur un même arbre de rotation de façon que les deux grandes bases soient parallèles et que les deux surfaces latérales coniques de révolution soient en opposition (Figure 3).

## Patentansprüche

1. Vorrichtung, die ermöglicht, in einem eine Wand (12) mit verhältnismäßig geringer Dicke besitzenden Rohr (11) einen Schnitt längs einer Schnittebene (10) auszuführen, und wenigstens umfaßt:
eine Schneidklinge (20), die eine kreisförmige Schneide (21) aufweist,
Mittel (22) zum Antreiben der Schneidklinge zu einer Drehbewegung um eine zur Schneidebene senkrechte Drehachse (23),
steuerbare Mittel (24), die die Schneidklinge in einer Translationsbewegung (25) verlagern, derart, daß die Schneide (21) in der Schneidebene (10) verlagert wird, und
Steuermittel,
**dadurch gekennzeichnet, daß**
die Steuermittel (26) so programmierbar sind, daß sie an ihrem Ausgang (28) Steuersignale bereitstellen, die in den Eingang (29) der steuerbaren Mittel (24) zur translatorischen Verlagerung der Schneidklinge eingegeben werden, derart, daß:
in einem ersten Schritt die Schneide (21) in einen Kontakt mit einem Punkt (30) der Wand (12), der sich in der Schneidebene (10) befindet, gebracht wird, daß
in einem zweiten Schritt nach dem ersten die Schneide (21) auf Höhe des Punkts (30) mit einer gegebenen Druckkraft und während einer bestimmten Zeit gegen die Wand des Rohrs gedrückt wird, wobei während dieser Zeit die Schneidklinge (20) zu einer Drehbewegung angetrieben wird, um durch Reibung wenigstens eine Erweichung des den Punkt (30) umgebenden Werkstoffabschnitts zu bewirken, und daß
in einem dritten Schritt nach dem zweiten die Schneidklinge einer plötzlichen Translation (25) unterworfen wird und dabei in Drehung gehalten wird, derart, daß die Schneide (21) die gesamte Schneidebene (10) beschreibt.

2. Vorrichtung nach Anspruch 1, **dadurch gekennzeichnet, daß** sie außerdem Mittel (40) umfaßt, die wenigstens einen Abschnitt (42) der Wand (12) des Rohrs (11), der an eine Seite der Schnittebene (10) angrenzt, halten.

3. Vorrichtung nach einem der Ansprüche 1 und 2, **dadurch gekennzeichnet, daß** die Schneidklinge (20) die Form eines Kegelstumpfs besitzt, der eine große Grundfläche (50) und eine rotationssymmetrische konische Seitenfläche (51) aufweist, wobei die kreisförmige Schneide (21) durch den Rand der großen Grundfläche (50) gebildet ist, wobei die große Grundfläche zur Drehachse (53) der Schneidklinge senkrecht ist und die rotationssymmetrische konische Seitenfläche (51) auf die Drehachse zentriert ist.

4. Vorrichtung nach Anspruch 3 zum gleichzeitigen Ausführen zweier Schnitte in zwei entsprechenden parallelen Schnittebenen (10-1, 10-2) am selben Rohr (11), **dadurch gekennzeichnet, daß** sie zwei Schneidklingen (20-1; 20-2) in Kegelstumpfform umfaßt, die jeweils eine große Grundfläche und eine rotationssymmetrische konische Seitenfläche besitzen, wobei diese Klingen an derselben Drehwelle drehbar in der Weise angebracht sind, daß die beiden großen Grundflächen zueinander parallel sind und daß die beiden rotationssymmetrischen konischen Seitenflächen einander gegenüber angeordnet sind (Fig. 3).

## Claims

1. A device enabling a cut to be made in a plane of cut (10) in a tube (11) having a wall (12) of relatively small thickness, the device comprising at least:
a cutting blade (20) having a circular cutting edge (21);
means (22) for driving the cutting blade in rotary motion about an axis of rotation (23) perpendicular to the cutting plane;
controllable means (24) for moving the cutting blade in translation (25) in such a manner that the cutting edge (21) moves in the cutting plane (10); and
control means,
the device being **characterized in that** said control means (26) are programmable to deliver at their output (28) control signals that are applied to the input (29) of the controllable means (24) for moving the cutting blade in translation in such a manner that:
in a first step, the cutting edge (21) is brought into contact with a point (30) of the wall (12) situated in the cutting plane (10);
in a second step, following the first, the cutting edge (21) is applied against the wall of the tube at the said point (30) with given applied pressure during a determined length of time during which the cutting blade (20) is driven with its rotary motion so as to at least soften by friction the material surrounding the point (30); and
in a third step, following the second, the cutting blade is subjected to a sudden movement in translation (25) while continuing to be maintained in rotation so that the cutting edge (21) describes the entire plane of cut (10).

2. A device according to claim 1, **characterized by** the fact that it further comprises means (40) for holding at least a portion (42) of the wall (12) of the tube (11) adjacent to the plane of cut (10).

3. A device according to claim 1 or claim 2, **characterized by** the fact that the cutting blade (20) adopts the shape of a truncated cone having a large base (50) and a conical side surface of revolution (51), the circular cutting edge (21) being constituted by the edge of the large base (50), said large base being perpendicular to the axis of rotation (23) of the cutting blade and the conical side surface of revolution (51) being centered on said axis of rotation.

4. A device according to claim 3 for making two cutouts simultaneously in a single tube (11) in two respective parallel cutting planes (10-1, 10-2), the device being **characterized by** the fact that it comprises two cutting blades (20-1; 20-2) in the form of truncated cones each comprising a large base and a conical side surface of revolution, said two blades being mounted to rotate on the same rotary shaft so that both large bases are parallel and so that the two conical side surfaces of revolution are in opposition (Figure 3).
